# EUROPEAN PATENT SPECIFICATION

(11) **EP 3 767 214 B1**
(45) Date of publication and mention of the grant of the patent: **03.11.2021**
(21) Application number: 20186566.4
(22) Date of filing: 17.07.2020
(51) Int. Cl.: F27B 9/00, C04B 35/00, F23N 5/00, F23N 1/00, F23N 5/18, F23N 3/00

(54) **METHOD AND KILN FOR THE FIRING OF SUBSTANTIALLY FLAT BASE CERAMIC ARTICLES**
VERFAHREN UND OFEN ZUM BRENNEN VON KERAMISCHEN ARTIKELN MIT IM WESENTLICHEN FLACHEM BODEN
PROCÉDÉ ET FOUR POUR LA CUISSON D'ARTICLES EN CÉRAMIQUE À BASE ESSENTIELLEMENT PLATE

(30) Priority: 18.07.2019 IT 201900012288
(43) Date of publication of application: 20.01.2021
(73) Proprietor: Sacmi Forni & Filter S.p.A., 40026 Imola (BO) (IT)
(72) Inventor: VACCARI, Pier Francesco, 40026 IMOLA (BO) (IT)
(74) Representative: Mangini, Simone

(56) References cited:
- EP-A2- 1 884 730
- IT-A1- MO20 120 329
- US-A1- 2018 180 280

## Description

### CROSS-REFERENCE TO RELATED APPLICATIONS

This patent claims priority from Italian patent application no. 102019000012288 filed on 18/07/2019.

### TECHNICAL FIELD

The present invention concerns a method and a kiln for the firing of base ceramic articles. In particular, the present invention is advantageously applied in the firing of base ceramic articles to obtain ceramic slabs, in particular tiles, to which the following description will explicitly refer.

### BACKGROUND TO THE INVENTION

In the field of the production of ceramic slabs, in particular tiles, it is common practice to fire at high temperature the base ceramic articles, obtained by pressing a semi-dry mix (if necessary, followed by a decoration phase), in a kiln, typically a tunnel kiln.

A kiln for firing base ceramic articles is normally divided into a pre-heating area, a firing area and a cooling area, positioned downstream of the firing area, to reduce the temperature of the base ceramic articles coming from the firing area. The base ceramic articles pass through the different areas of the kiln, transported by a conveying device which extends along a given path through the kiln.

Usually, a plurality of burners is also provided organized into groups of burners, to heat the firing area so as to fire the base ceramic articles passing inside said area and obtain ceramic slabs, in particular tiles.

Each burner comprises a mixing body, in which a predefined quantity (flow rate) of fuel (for example methane gas) and a predefined quantity (flow rate) of oxidiser (typically ambient air having approximately 21% of oxygen) are mixed together to generate a combustion mixture, and a combustion chamber in which said combustion mixture is burnt, thus heating the firing area.

Furthermore, a known kiln comprises: a fuel feeding device for feeding the fuel towards the burner (or towards each burner of the plurality of burners) and an oxidiser feeding device for feeding the oxidiser towards the same burner.

To obtain optimal firing of the base ceramic articles in a kiln like the one described above, it is important to accurately control the firing conditions, and in particular the firing temperature inside each section of the firing area. In fact, firing of the ceramic articles in non-optimal conditions, for example at too low or too high a firing temperature, inevitably results in defects in the end ceramic products (namely in the ceramic slabs, and in particular in the tiles), such as for example defects of form, like unevenness, or defects of colour or brilliance. This results in an increase in production scrap.

However, the temperature is not the only parameter that can play an important role in the quality of the end ceramic products. In this regard, also the weight ratio between the oxidiser and the fuel can affect various aspects of the end ceramic product. For example, in the presence of higher or lower percentages of oxygen (more or less oxidising atmosphere), different chromatic effects can be obtained.

In this context, it is expedient to identify, for each end product to be produced, the optimal weight ratio between the oxidiser and the fuel and apply these conditions whenever said end ceramic product is desired.

In the known kilns, however, adjustment of the weight ratio between the oxidiser and the fuel in the combustion mixture is a fairly complex operation which is performed manually and which requires the intervention of an expert technician on the fuel feeding device and on the oxidiser feeding device, and in particular on adjustment valves arranged, respectively, along a fuel feeding duct and along an oxidiser feeding duct, thus modifying the quantity (flow rate) of the fuel and/or oxidiser which is fed towards the burner (or towards each burner of the plurality of burners).

In detail, in the more traditional kilns, the adjustment valves are mechanically connected to each other (typically by means of a lever connection) so that the adjustment (namely the opening variation) of the fuel feeding device adjustment valve determines a consequent adjustment (namely opening variation) of the adjustment valve of the oxidiser feeding device, the latter being connected to the adjustment valve of the fuel feeding device by the lever connection.

The more modern kilns, on the other hand, are provided with a pneumatic adjustment of the adjustment valves. In other words, the fuel feeding device adjustment valve is a pneumatically operated valve and the oxidiser feeding device adjustment valve is positioned in fluidic connection with the fuel feeding device adjustment valve thus inducing a flow of oxidiser towards the fuel feeding device adjustment valve; said valve will be consequently adjusted depending on the pressure at which said oxidiser flow intercepts it (therefore depending on the pressure at which the oxidiser is fed). In this way, it is possible to control the fuel feeding device adjustment valve, and therefore the quantity (flow rate) of the fuel to be fed, depending on the pressure, and therefore the flow rate, of the oxidiser.

Both the systems described above allow the ratio between fuel and oxidiser to be maintained substantially constant (with variation in the absolute quantity -flow rate- of the fuel fed to the burners).

However, again in both cases described above, whenever, for any reason (for example because the type of ceramic product to be treated changes or because the type of treatment to be carried out on the ceramic product changes or because the flow of base ceramic articles to the kiln stops) it is desirable to modify the firing conditions, and therefore the weight ratio between the oxidiser and the fuel of the combustion mixture has to be changed, it is necessary to carry out manual adjustments on the pneumatically operated adjustment valve of the fuel feeding device.

The manual adjustment operations described above for both the known kilns are very complex, they require the intervention of an expert operator, and inevitably entail production standstills, with considerable drawbacks in terms of production time and costs.

For all these reasons, in the majority of cases said adjustments are not carried out even when the firing conditions vary, namely when the base ceramic article to be treated and/or the firing phases and/or the kiln filling conditions change. In other words, there is the tendency to fix certain adjustment conditions of the adjustment valves such as to guarantee a certain weight ratio between the oxidiser and the fuel in the combustion mixture and never change it, therefore obtaining results that are not always optimal.

Furthermore, even when the adjustment operations described above are carried out, their result depends very much on the abilities of the operator performing them and it is difficult to replicate. The impossibility of accurately replicating the same firing conditions to reproduce a product identical (or a plurality of products identical) to another (or to another plurality of products) inevitably results in an increase in production scrap. A prior art firing method and kiln is known from IT MO20 120 329 A1, this document however at least not disclosing the method steps of, and the devices for, detecting oxygen concentration in the firing chamber during the first adjustment step and the second adjustment step, the weight ratio between the oxidiser and the fuel fed to said at least one burner is varied depending on the concentration detected. Furthermore not disclosed therein is a length of the firing chamber of approximately 60m.

### SUMMARY

The object of the present invention is to provide a method and a kiln for the firing of base ceramic articles, which overcome, at least partially, the drawbacks of the known art and are, at the same time, easy and inexpensive to produce.

In accordance with the present invention, a method and a kiln are provided for the firing of base ceramic articles as claimed in the following independent claims and, preferably, in any one of the claims depending directly or indirectly on the independent claims.

The claims describe preferred embodiments of the present invention forming an integral part of the present description.

### BRIEF DESCRIPTION OF THE DRAWINGS

The present invention will now be described with reference to the attached drawings, which illustrate some non-limiting embodiments thereof, in which:
- figure 1 is a schematic lateral view of a kiln for the firing of base ceramic articles in accordance with the present invention;
- figure 2 is a schematic representation on an enlarged scale of a part of the kiln of figure 1.

### EMBODIMENTS OF THE INVENTION

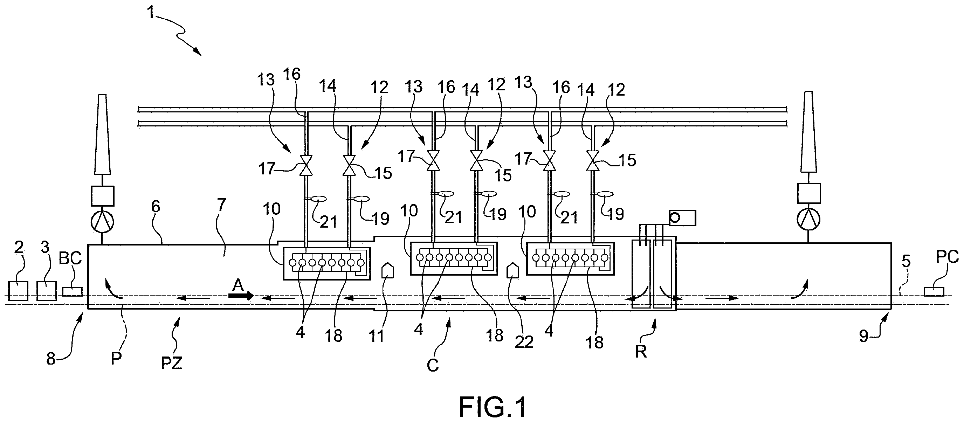

In figure 1, the number 1 indicates overall a kiln for the firing of substantially flat base ceramic articles BC. In particular, the present description will make particular reference to the firing of substantially (but not necessarily) flat base ceramic articles BC to obtain end ceramic products PC, more in particular ceramic slabs, more precisely tiles.

The substantially (but not necessarily) flat base ceramic articles BC are generally obtained by pressing, by means of a pressing apparatus 2 (known per se and not further described here) for pressing a ceramic powder (a semi-dry mix, in particular having a humidity that varies from 5% to 7%) mainly silica based (at least approximately 35% - in particular, at least approximately 40% - by weight of silica relative to the total weight of the base ceramic articles BC) and having less than approximately 50% (in particular, less than approximately 30%) by weight of alumina relative to the total weight of the base ceramic articles BC. According to some non-limiting embodiments, the base ceramic articles BC comprise up to approximately 80% by weight of silica relative to the total weight of the base ceramic articles BC. Normally, the base ceramic articles BC comprise further inorganic oxides like magnesium, zirconium, sodium and potassium oxides.

Advantageously but not necessarily, the base ceramic articles BC are decorated by means of a decoration device 3 (known per se and not further described here), positioned upstream of the kiln 1, before being conveyed, by means of a conveying device 5, into the kiln 1 where the base ceramic articles BC are fired.

The conveying device 5, schematically illustrated in figure 1 by a broken line, is configured to convey the base ceramic articles BC along a given path P (in a feed direction A).

According to some non-limiting embodiments not illustrated, the conveying device 5 comprises a plurality of ceramic rollers (if necessary, moved at different speeds to differentiate the firing of the articles).

Advantageously but not necessarily, the kiln 1 (which, in particular, is a roller kiln) comprises a (substantially flat) lateral wall 6 which delimits a firing chamber 7. The firing chamber 7 is at least 40m long, in particular at least approximately 60m, more in particular at least 130m (even more in particular, up to approximately 600m), and has an input station 8 (through which, in use, the base ceramic articles BC enter the firing chamber 7) and an output station 9 through which, in use, the end ceramic products CP (in particular, the ceramic slabs or tiles) leave the firing chamber 7. In particular, the given path P, along which the base ceramic articles BC are fed, extends from the input station 8 to the output station 9. More precisely, according to the non-limiting embodiment illustrated in figure 1, the path P extends from the pressing apparatus 2, through the decoration device 3 and through the firing chamber 7 (between the input station 8 and the output station 9).

Advantageously but not necessarily, the firing chamber 7 is divided into a pre-heating area PZ, a firing area C and a cooling area R, positioned downstream of the firing area C, to reduce the temperature of the base ceramic articles BC before they leave the kiln 1.

The kiln 1 further comprises at least one burner 4, advantageously a plurality of burners 4 (which, in particular, are positioned above and below or only above or only below the given path P) to burn a combustion mixture so as to heat the firing chamber 7 (in particular, the areas PZ and C) and fire the base ceramic articles BC as they pass into the firing chamber 7 and obtain the end ceramic products PC (in particular, the ceramic slabs).

In particular, according to the non-limiting embodiment illustrated in figure 1, the kiln 1 comprises a plurality of burners 4 organised in a plurality of groups 10 of burners 4 (in this case eight burners 4), in particular positioned above and below or only above or only below the given path P.

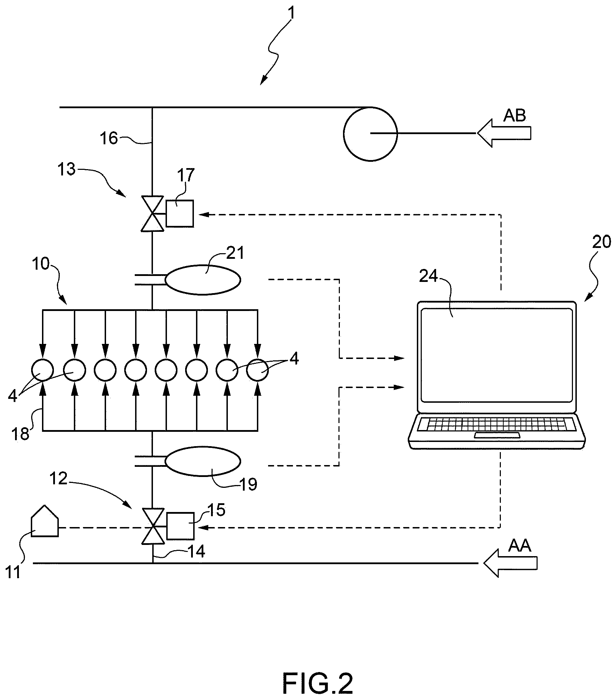

Advantageously but not necessarily, each burner 4 comprises a mixing body (not illustrated) in which a fuel (shown in figure 2 by an arrow AA), for example methane gas, and an oxidiser (shown in figure 2 by another arrow AB), typically ambient air with approximately 21% of oxygen, are mixed to obtain the combustion mixture, and a combustion chamber (not illustrated) in which the combustion mixture (once ignited to obtain a flame) is burnt, thus firing the base ceramic articles BC (causing them to pass from an initial temperature) at a firing temperature of at least approximately 500°C (in particular at least approximately 900°C, more in particular at least approximately 1200°C).

According to some non-limiting embodiments, the kiln 1 is configured so that the temperature inside the firing chamber 7 (more precisely, of the firing area C) is at maximum approximately 1400°C (in particular, maximum approximately 1300°C) .

In particular, when talking about temperature of the firing chamber 7 (more precisely, of the firing area C) the temperature inside said firing chamber 7 is referred to, namely the temperature measured by a detection device 11 which is configured to detect the temperature inside the firing chamber 7 (more precisely, of the firing area C), for example with an appropriate sensor, like a thermocouple. Advantageously but not necessarily, the detection device 11 is positioned inside the firing chamber 7. Furthermore, according to a variation not illustrated, the kiln 1 comprises a plurality of detection devices 11 configured to detect the temperature inside the firing chamber 7, each positioned corresponding to a burner 4 (or a group 10 of burners 4) in order to more accurately control the temperature throughout the firing chamber 7.

The oven 1 further comprises (at least) a fuel feeding device 12 configured to feed the fuel towards the burner 4 (or towards each group 10 of burners 4) and (at least) an oxidiser feeding device 13 configured to feed the oxidiser towards the burner 4 (or towards each group 10 of burners 4).

In accordance with some non-limiting embodiments like the one illustrated in figure 1, the kiln 1 comprises a plurality of (in this case three) fuel feeding devices 12, each configured to feed the fuel towards (to) a burner 4 or, more precisely, to a group 10 of burners 4 of the plurality of groups 10 of burners 4 (in this case three).

Advantageously but not necessarily, the (each) fuel feeding device 12 comprises (is composed of at least) a fuel feeding duct 14, fluidically connected to the burner 4 (or to each group 10 of burners 4) and an adjustment valve 15 (in particular, electrically operated) arranged along the fuel feeding duct 14 (in particular, upstream of the burner 4 - or of each group 10 of burners 4) and which can be operated (appropriately opened) to adjust the quantity (the flow rate - namely, the quantity by weight in the unit of time) of fuel to be circulated along the fuel feeding duct 14, so as to adjust the quantity (flow rate) of the fuel to be fed to the burner 4 (or to each group 10 of burners 4), and therefore the quantity (flow rate) of the fuel comprised in the combustion mixture.

Analogously, in accordance with some non-limiting embodiments like the one illustrated in figure 1, the kiln 1 comprises a plurality (in this case three) of oxidiser feeding devices 13, each configured to feed the oxidiser towards (to) a burner 4 or, more precisely, towards (to) a group 10 of burners 4 of the plurality of groups 10 of burners 4 (in this case three).

Advantageously but not necessarily, the (each) oxidiser feeding device comprises (consists of at least) an oxidiser feeding duct 16, fluidically connected to the burner 4 (or to each group 10 of burners 4) and an adjustment valve 17, advantageously electrically operated, arranged along the oxidiser feeding duct 16 (in particular, upstream of the burner 4 - or of each group 10 of burners 4) and which can be operated (namely appropriately opened) to adjust the quantity (flow rate) of the oxidiser to be circulated along the oxidiser feeding duct 16, so as to adjust the quantity (flow rate) of the oxidiser to be fed to the burner 4 (or to each group 10 of burners 4) and therefore the quantity (flow rate) of the oxidiser which, together with the fuel fed by the fuel feeding device 12, forms the combustion mixture.

According to some embodiments, like the one illustrated in figure 1, the fuel feeding duct 14 and the oxidiser feeding duct 16 comprise branches 18 (illustrated schematically in figure 1 and 2) to feed, respectively, the fuel and the oxidiser fed to each group 10 of burners 4 towards the single burners 4 of each group 10 of burners 4.

Advantageously but not necessarily, each burner 4 (more precisely, each group 10 of burners 4) is arranged (in the firing chamber 7) above the conveying device 5 to transfer heat to the base ceramic articles BC as they pass through the firing chamber 7 along the given path P.

The kiln 1 further comprises a flow rate measuring device 19 which is configured to estimate the flow rate of the fuel or the oxidiser that passes through the fuel or oxidiser feeding duct 14 or 16 and which is fed to the burner 4 (or to each group 10 of burners 4) following operation of the feeding device 12 or the feeding device 13, and in particular operation of the adjustment valve 15 or the adjustment valve 17.

According to some non-limiting embodiments like the one illustrated in the attached figures, the flow rate measuring device 19 is configured to estimate the flow rate of the fuel that passes through the fuel feeding duct 14 and which is fed to the burner 4 (or to each group 10 of burners 4) following operation of the feeding device 12, and in particular operation of the adjustment valve 15.

Furthermore, the kiln 1 comprises a processing unit 20 (illustrated in figure 2) which is configured to operate the fuel feeding device 12 and the oxidiser feeding device 13. In particular, as shown schematically in figure 2, the processing unit 20 is connected to the adjustment valves 15 and 17 and is configured to operate (to appropriately open) the valves 15 and 17 so as to vary the flow rate of the fuel and the oxidiser to be fed to the burner 4, respectively, by means of the fuel feeding duct 14 and the oxidiser feeding duct 16.

Advantageously but not necessarily, the adjustment valves 15 and 17 are arranged along the fuel feeding duct 14 and along the oxidiser feeding duct 16 respectively, so that when they are operated they restrict the section of the ducts 14 and 16 respectively, thus varying the flow rate of the fuel and the oxidiser that pass through said ducts 14 or 16 and therefore the maximum flow rate of the fuel and the oxidiser fed to the burner 4 (or to the group 10 of burners 4) positioned downstream of the adjustment valve 15 or 17 respectively.

In detail, the processing unit 20 is configured (programmed) to operate the feeding device 12 or the feeding device 13 (and in particular the adjustment valve 15 or the adjustment valve 17) depending on the temperature detected by the detection device 11 inside the firing chamber 7 (in order that the firing temperature is within a given interval - therefore, in particular, as near as possible to the optimal temperature), and is furthermore configured (programmed) to operate the other feeding device 12 or feeding device 13 (and in particular the other adjustment valve 15 or adjustment valve 17) depending on the flow rate of the fuel or the oxidiser estimated by the flow rate measuring device 19.

More specifically, when the flow rate measuring device 19 is (arranged along the fuel feeding duct 14 and is) configured to estimate the fuel flow rate, the processing unit 20 is configured (programmed) to operate (control) the fuel feeding device 12 (and in particular the adjustment valve 15) depending on the temperature detected inside the firing chamber 7 and the oxidiser feeding device 13 (and in particular the adjustment valve 17) depending on the fuel flow rate estimated by the flow rate measuring device 19. Vice versa, when the flow rate measuring device 19 is (arranged along the oxidiser feeding duct 16 and is) configured to estimate the oxidiser flow rate, the processing unit 20 is configured (programmed) to operate (control) the oxidiser feeding device 13 (and in particular the adjustment valve 17) depending on the temperature detected inside the firing chamber 7 and the fuel feeding device 12 (and in particular the adjustment valve 15) depending on the oxidiser flow rate estimated by the flow rate measuring device 19.

In detail, advantageously but not exclusively, the processing unit 20 is configured to operate the feeding device 12 (and in particular the adjustment valve 15) and the feeding device 13 (and in particular the adjustment valve 17) so as to maintain the weight ratio between the oxidiser and the fuel in the combustion mixture within a given interval.

In particular, the processing unit 20 is configured (programmed) to maintain the firing temperature always between 500°C and 1400°C, in particular between 900°C and 1300°C, and even more in particular between 1000°C and 1250°C. The optimal firing temperature, namely the target temperature to be obtained and maintained inside the firing chamber 7, can vary depending on the type of base ceramic article BC, the firing phases, the filling conditions of the kiln 1 etc.

Analogously, the weight ratio between oxidiser and fuel can vary depending on the type of base ceramic article BC, the firing phases, the filling conditions of the kiln 1 etc. For example, a different weight ratio between the oxidiser and the fuel (and therefore a greater or lesser presence of oxygen of the firing chamber 7) can modify, at the end of firing, the colour of the end ceramic product PC.

In accordance with some embodiments, like the one illustrated in the attached figures, the kiln 1 comprises, in addition to the flow rate measuring device 19, another flow rate measuring device 21 configured to estimate the flow rate of the fuel or the oxidiser which is not measured by the flow rate measuring device 19.

In other words, if the flow rate measuring device 19 estimates the flow rate of the fuel fed to the burner 4 (or to each group 10 of burners 4), the flow rate measuring device 21 estimates the flow rate of the oxidiser fed to the burner 4 (or to each group 10 of burners 4), and vice versa.

In this advantageous but non-exclusive embodiment, the processing unit 20 is configured to operate the feeding device 12 and/or the feeding device 13 (the feeding device 12 or the feeding device 13) depending on (also) the flow rate value estimated by the flow rate measuring device 21.

In particular, the processing unit 20 based on the flow rate value measured by the flow rate measuring device 21 adjusts (if necessary) the adjustment valve 15 or 17 so as to vary the opening thereof relative to the position adopted depending on the temperature detected by the detection device 11 or the flow rate detected by the flow rate measuring device 19, in order to set and maintain optimal firing conditions (namely, a weight ratio between oxidiser and fuel within the above-mentioned given interval). Therefore, the presence of the flow rate measuring device 21 enables a check to be carried out and consequently even more accurate adjustment of the quantity (flow rate) of the fuel and the oxidiser fed to the burner 4 (or to each group 10 of burners 4) and consequently of the firing conditions.

In accordance with a preferred but non-limiting embodiment of the invention illustrated in figure 2, the flow rate measuring device 19 is configured to measure the flow rate of the fuel which is fed to the group 10 of burners 4 (and is arranged along the fuel feeding duct 14 upstream of the group 10 of burners 4 and, in particular, downstream of the adjustment valve 15) and the flow rate measuring device 21 is configured to measure the flow rate of the oxidiser which is fed to the group 10 of burners 4 (and is arranged along the oxidiser feeding duct 16 upstream of the group 10 of burners 4 and, in particular, downstream of the adjustment valve 17). In this case, the processing unit 20 is configured (programmed) to operate initially the adjustment valve 15 depending on the temperature detected by the detection device 11 and the adjustment valve 17 depending on the flow rate value measured by the flow rate measuring device 19.

Advantageously but not necessarily, the processing unit 20 is also configured (programmed) to carry out a further control and possibly (if necessary) a further adjustment (namely modifying again the opening of one or both the adjustment valves 15 and 17) also (not only based on the temperature value detected inside the firing chamber 7 or the flow rate value detected by the flow rate measuring device 19) based on the flow rate measured by the flow rate measuring device 21. In other words, depending on the oxidiser flow rate measured by the flow rate measuring device 21, the processing unit 20 adjusts the flow rate of the fuel fed through the fuel feeding duct 14; in particular it varies (if necessary) the opening of the adjustment valve 15 initially operated (only) based on the temperature detected. Alternatively or additionally, based on the oxidiser flow rate estimated by the flow rate measuring device 21, the processing unit 20 adjusts in feedback the flow rate of the oxidiser fed through the oxidiser feeding duct 16; in particular it varies (if necessary) the opening of the adjustment valve 17 initially operated (only) based on the fuel flow rate measured by the flow rate measuring device 19.

In accordance with another possible non-exclusive variation of the invention, also the fuel flow rate value measured by the flow rate measuring device 19 can be used (if necessary) also to vary in feedback the opening of the adjustment valve 15 initially operated (only) based on the temperature detected inside the firing chamber 7. The feedback control allows even more accurate adjustment of the quantity (flow rate) of the fuel and oxidiser to be fed to the burner 4 (or to each group 10 of burners 4), ensuring optimized firing conditions as far as possible.

Moreover, to further improve the control of the firing conditions, the flow rate values measured by the flow rate measuring device 19 and, when provided, by the flow rate measuring device 21, are stored by the processing unit 20 in a memory (not illustrated, and advantageously incorporated in the processing unit). Advantageously, in this way it will be possible to reproduce the same firing conditions several times by simply selecting, via the processing unit 20, the desired firing conditions from among those stored. In this way it is possible to fire the base ceramic articles BC at different times in the same conditions, thus obtaining the same results, namely end ceramic products PC with substantially identical characteristics even if produced during different production cycles.

Advantageously but not exclusively, the flow rate measuring devices 19 and 21 comprise (consist of) a respective calibrated flange. Alternatively or in combination, the flow rate measuring devices 19 and 21 comprise (consist of) a sensor configured to measure the flow rate of the fuel or oxidiser passing through the fuel or oxidiser feeding duct 14 or 16.

In accordance with a non-limiting variation not illustrated of the invention, the flow rate measuring devices 19 and 21 are replaced by pressure measuring devices configured to detect the pressure of the fuel or the oxidiser that passes through the fuel or oxidiser feeding duct 14 or 16. In this case, the processing unit 20 is configured (programmed) to obtain the fuel or oxidiser flow rate from the pressure value obtained, or is programmed to operate the adjustment valve 15 and/or the adjustment valve 17 depending on the pressure value measured by the pressure measuring devices.

According to the invention, the kiln 1 comprises a detection device 22 configured to detect the concentration of oxygen inside the firing chamber 7. The processing unit 20 is configured to adjust the feeding device 12 and/or the feeding device 13 (and in particular the adjustment valve 15 and/or the adjustment valve 17) also depending on the concentration of oxygen detected so as to maintain the concentration of oxygen in the firing chamber 7 within a given interval.

This allows the quantity (flow rate) of the fuel and/or the oxidiser to be fed to the burner 4 (or to each group 10 of burners 4) to be modified taking account of the (real) quantity (flow rate) of oxygen present in the firing chamber 7, therefore for example considering also any oxidiser flows which are directed from the cooling area R (and/or from the input station 8 and/or from the output station 9) towards the firing chamber 7 of the kiln 1.

Therefore, advantageously but not necessarily, also the oxygen concentration value can be used (if necessary) to adjust (therefore vary the opening of) the adjustment valve 15 and, alternatively or in combination, the adjustment valve 17 thus optimising the combustion, namely varying the weight ratio between oxidiser (oxygen) and fuel (typically methane).

In accordance with some non-limiting embodiments, like the one illustrated in figure 2, the kiln 1 further comprises a user interface 24, which can be integrated with the processing unit 20 when the processing unit 20 is a computer or a tablet etc., as in the case illustrated, or can be a separate entity connected to the processing unit 20. In this way the user of the kiln 1 (namely a more or less expert operator) can easily control, through the user interface 24, the processing unit 20, which in turn operates (controls) the adjustment valves 15 and/or 17 thus modifying the quantity (flow rate) of the fuel and/or of the oxidiser as the base ceramic articles BC to be treated or the group 10 of burners 4 etc. vary.

According to a further aspect of the present invention, a method is provided of firing base ceramic articles BC, so as to obtain end ceramic products PC (in particular, ceramic slabs; more in particular, tiles) by firing substantially flat base ceramic articles BC obtained from a ceramic powder (a semi-dry mixture, in particular having a humidity ranging from 5% to 7%) having less than 50% of alumina (in particular, less than 30%) by weight, relative to the total weight of the base ceramic articles BC.

According to some embodiments, the base ceramic articles BC are mainly silica-based (at least approximately 35% - in particular, at least approximately 40% by weight of silica relative to the total weight of the base ceramic articles BC).

More precisely, the method for firing base ceramic articles BC comprises: a conveying step, during which the base ceramic articles BC are conveyed along the given path P described above; a fuel feeding step and an oxidiser feeding step towards (to) the burner 4 (or towards at least a group 10 of burners 4, and in particular towards each group 10 of burners 4) in order to produce a combustion mixture; and a combustion step, during which the combustion mixture is burnt. The combustion heat is transferred towards (to) the firing chamber 7 of the kiln 1 so as to fire the base ceramic articles BC while said base ceramic articles BC are (conveyed by the conveying device 5) inside the firing chamber 7 during a firing step (at least partially) simultaneous with (and/or subsequent to) the combustion step.

The method further comprises an (initial) adjustment step, during which the quantity (flow rate) of the fuel and/or of the oxidiser fed to the burner 4 (or to each group 10 of burners 4) is adjusted depending on a temperature detected inside the firing chamber 7, in particular in the area of the burner 4 (or the group 10 of burners 4).

Advantageously but not necessarily, the adjustment step is at least partially simultaneous with the firing step and the combustion step.

The method further comprises: a flow rate measuring step, during which the flow rate measuring device 19 estimates (and/or measures and/or detects) the flow rate of the fuel and/or the oxidiser (in particular, the flow rate of the fuel or the oxidiser) which is fed to the burner 4 (or to any group 10 of burners 4), in particular following the above described adjustment step (initial, namely the adjustment carried out depending on the temperature detected in the firing chamber 7); and a further adjustment step, during which the quantity (flow rate) of the oxidiser and/or the fuel (in particular, the flow rate of the fuel or the oxidiser) fed to said burner 4 (or to each group 10 of burners 4) is adjusted depending on the flow rate of the fuel and/or oxidiser (fuel or oxidiser) estimated during the measuring step.

In detail, when (initially, in particular in the initial adjustment step) the quantity (flow rate) of the fuel is adjusted depending on the temperature detected in the firing chamber 7, then at least the quantity (flow rate) of the oxidiser (and possibly also the quantity of the fuel) is adjusted (subsequently) depending on the flow rate of the fuel estimated during the flow rate measuring step. Vice versa, when (initially, in particular in the initial adjustment step) the quantity (flow rate) of the oxidiser is adjusted depending on the temperature detected in the firing chamber 7, then at least the quantity (flow rate) of the fuel (and possibly also the quantity of the oxidiser) is adjusted (subsequently) depending on the flow rate of the oxidiser estimated during the flow rate measuring step.

Advantageously but not necessarily, the method also comprises a further flow rate measuring step, during which the above-described flow rate measuring device 21 estimates the flow rate of the oxidiser or fuel which is fed to the burner 4 (or to each group 10 of burners 4) and which is not estimated/measured during the preceding measuring step by the flow rate measuring device 19. Advantageously, the flow rate value estimated during said subsequent flow rate measuring step is used (in combination with the flow rate value measured by the flow rate measuring device 19 and/or with the temperature value detected in the firing chamber 7) to adjust the quantity (flow rate) of the oxidiser and/or the fuel which is fed to the burner 4 (or to each group 10 of burners 4) during the fuel feeding step and/or the oxidiser feeding step.

In accordance with a preferred but non-limiting embodiment, the quantity (flow rate) of the fuel to be fed to the burner 4 (or to each group 10 of burners 4) during the fuel feeding step is adjusted depending on the temperature detected in the firing chamber 7; during the measuring step the flow rate of the fuel (actually) fed during said fuel feeding step is estimated (and/or measured, and/or detected) and based on said fuel flow rate value, during the further adjustment step (subsequent to or simultaneous with the adjustment step depending on the temperature), the quantity (flow rate) of the oxidiser to be fed to the burner 4 (or to each burner 4 of the group 10 of burners 4) during the oxidiser feeding step is adjusted. Alternatively or additionally, the fuel flow rate value estimated during the measuring step is used (not only to adjust the oxidiser flow rate) also to vary in feedback the quantity (flow rate) of the fuel to be fed to the burner 4 (or to each group 10 of burners 4).

In an advantageous but non-limiting variation, the above-described further measuring step is provided; in detail, during this measuring step the flow rate of the oxidiser (actually) fed during the oxidiser feeding step is measured, via the flow rate measuring device 21, and depending on said flow rate value a new adjustment step is carried out (which can be simultaneous with or subsequent to the other adjustment steps), during which the flow rate of the fuel fed during the fuel feeding step (and/or the oxidiser fed during the oxidiser feeding step - feedback adjustment) is adjusted (if necessary), thus more accurately controlling the combustion in order to attain the optimal firing conditions as closely as possible.

In accordance with another embodiment, the quantity (flow rate) of the oxidiser to be fed to the burner 4 (or to each burner 4 of the group/s 5 of burners 4) is adjusted during the oxidiser feeding step depending on the temperature detected in the firing chamber 7; during the measuring step, the flow rate of the oxidiser (actually) fed during said oxidiser feeding step and based on said oxidiser flow rate value is estimated; during the further adjustment step (subsequent to or simultaneous with the adjustment step depending on the temperature), the quantity (flow rate) of the fuel to be fed to the burner 4 (or to each burner 4 of the groups 10 of burners 4) during the fuel feeding step is adjusted. Additionally or alternatively, the oxidiser flow rate value estimated during the measuring step is used (not only to adjust the oxidiser flow rate) also to vary in feedback the quantity (flow rate) of the oxidiser to be fed to the burner 4 (or to each burner 4 of the groups 10 of burners). In an advantageous but non-limiting variation of said embodiment, a further measuring step is provided during which the flow rate of the fuel (actually) fed during the fuel feeding step is measured, via the flow rate measuring device 21, and based on said value another adjustment is performed (simultaneous with or subsequent to the other adjustments) in which, based on the fuel flow rate value detected, the flow rate of the fuel (and/or of the oxidiser) is adjusted (if necessary) thus more accurately controlling (in feedback) the combustion in order to achieve the ideal conditions as far as possible.

As explained previously with reference to the kiln 1, during the flow rate adjustment step of the fuel or the oxidiser depending on the temperature detected, the adjustment is performed so that the weight ratio between the oxidiser and the fuel in the mixture is within the given interval (e.g. approximately 1/10, 1/11, 1/12). The method of the invention therefore allows, depending on the type of base ceramic article BC to be treated, the different firing steps (in particular the different areas of the firing chamber 7) and the filling conditions of the kiln 1 etc., the desired fuel/oxidiser ratio value (within the given interval) to be reached and maintained (varying the flow rate of the fuel and/or of the oxidiser) so that the base ceramic articles BC are always fired in optimal conditions also in terms of consumption.

According to the invention, the method of the invention comprises a detection step, during which the concentration of oxygen inside said firing chamber 7 is detected so as to obtain a detected concentration for use during the adjustment steps to vary, depending on said detected concentration, the weight ratio between the oxidiser and the fuel fed to the burner 4 (or to each group 10 of burners 4), thus maintaining the concentration of oxygen within a given interval.

The present invention offers a number of advantages relative to the state of the art. These include the following.

It is possible to adjust accurately, simply, rapidly and effectively the quantity (flow rate) of the fuel and the oxidiser fed to each burner 4 (or to each group 10 of burners 4) thus varying, based on the different conditions (different types of base ceramic articles BC, different firing steps, etc.), the weight ratio between the oxidiser and the fuel so as to obtain optimal firing each time or in any case so as to have total control over the firing conditions of the base ceramic articles BC.

Furthermore, it is possible to obtain almost instantaneous adjustment of the quantity (flow rate) of the fuel and/or of the oxidiser to be fed to the burner 4 (or to each group 10 of burners 4). This allows transition in a very short time from one firing cycle (or from certain firing conditions) to another without the production standstills previously necessary to perform the manual adjustment operations, with considerable advantages in terms of production times and therefore costs.

In addition, the possibility of storing the flow rate values of the fuel and the oxidiser allows the different firing cycles to be digitalized and the firing cycles to be repeated at different times.

Furthermore, it is possible to carry out different adjustments of the various groups 10 of burners 4 and therefore heat the different areas of the firing chamber 7 to different temperatures, since each group 10 is connected to respective fuel and oxidiser feeding devices 12 and 13.

## Claims

1. A method for the firing of substantially flat base ceramic articles (BC); the method comprises:
at least one conveying step, during which the base ceramic articles (BC) are conveyed along a given path (P), which extends from an input station (8) to an output station (9) through a firing chamber (7) of a kiln (1);
a first feeding step, during which a fuel is fed towards at least one burner (4);
a second feeding step, during which an oxidizer is fed towards said at least one burner (4);
a combustion step, during which a combustion mixture, which is obtained from the fuel and the oxidizer fed to said at least one burner (4), is burnt;
at least one firing step, which is at least partially simultaneous with the combustion step and during which said at least one burner (4) heats said firing chamber (7) so as to fire the base ceramic articles (BC) inside the firing chamber (7) and obtain ceramic slabs (PC), in particular tiles;
at least one first adjustment step, which is at least partially simultaneous with the combustion step and during which the flow rate of the fuel and/or of the oxidizer fed to said at least one burner (4) during the first and/or the second feeding step is adjusted depending on a temperature detected inside the firing chamber (7);
at least one first flow rate measuring step, during which a first flow rate measuring device (19) estimates the flow rate of the fuel or of the oxidizer fed to said at least one burner (4) during the first or the second feeding step; provided that when during the first adjustment step the fuel flow rate is adjusted, during the first measuring step the fuel flow rate is estimated; when during the first adjustment step the oxidiser flow rate is adjusted, during the first measuring step the oxidiser flow rate is estimated;
at least one second adjustment step, during which the flow rate of the fuel and/or of the oxidizer fed to said at least one burner (4) during the second and/or the first feeding step is adjusted depending on the flow rate of the fuel or of the oxidizer estimated during the first flow rate measuring step; and
a detection step, during which the concentration of oxygen in said firing chamber (7) is detected so as to obtain a detected concentration; during the first adjustment step and the second adjustment step, the weight ratio between the oxidiser and the fuel fed to said at least one burner (4) is varied depending on the concentration detected; in particular, during the first adjustment step and the second adjustment step, the weight ratio between the flow rate of the oxidiser and the flow rate of the fuel fed to said at least one burner (4) is varied so as to maintain the concentration of oxygen in the firing chamber (7) within a third given interval.

2. The method according to claim 1 wherein, when during the first adjustment step the fuel flow rate is adjusted, during the second adjustment step the oxidiser flow rate is adjusted depending on the fuel flow rate estimated during the first flow rate measuring step; when during the first adjustment step the oxidiser flow rate is adjusted, during the second adjustment step the fuel flow rate is adjusted depending on the oxidiser flow rate estimated during the first flow rate measuring step.

3. The method according to claim 1 or 2 and comprising a second flow rate measuring step, during which a second flow rate measuring device (21) estimates the flow rate of the oxidizer or of the fuel fed to said at least one burner (4) during the first or the second feeding step; when during the first flow rate measuring step the first flow rate measuring device (19) estimates the flow rate of the fuel fed to said at least one burner (4) during the first feeding step, the second flow rate measuring device (21) estimates the flow rate of the oxidizer fed to said at least one burner (4) during the second feeding step; when during the first flow rate measuring step the first flow rate measuring device (19) estimates the flow rate of the oxidizer fed to said at least one burner (4) during the second feeding step, the second flow rate measuring device (21) estimates the flow rate of the fuel fed to said at least one burner (4) during the first feeding step;
during the second adjustment step, the flow rate of the fuel and/or of the oxidizer fed to said at least one burner (4) during the first and/or the second feeding step is adjusted depending on the flow rate of the fuel and/or of the oxidizer estimated during the first or the second flow rate measuring step.

4. The method according to any one of the claims from 1 to 3 wherein: during the first adjustment step, the flow rate of the fuel fed to said at least one burner (4) during the first feeding step is adjusted depending on a temperature detected inside the firing chamber (7); during the first flow rate measuring step, the first flow rate measuring device (19) estimates the flow rate of the fuel fed to said at least one burner (4) during the first feeding step; during the second adjustment step, the flow rate of the oxidizer fed to said at least one burner (4) during the second feeding step is adjusted depending on the flow rate of the fuel estimated during the first flow rate measuring step.

5. The method according to claim 4, and comprising a second flow rate measuring step, during which a second flow rate measuring device (21) estimates the flow rate of the oxidizer fed to said at least one burner (4) during the second feeding step; during the second adjustment step, the flow rate of the oxidizer and/or of the fuel fed to said at least one burner (4) during the second feeding step and/or during the first feeding step is adjusted also depending on the flow rate of the oxidizer estimated during the second measuring step.

6. The method according to any one of the claims from 1 to 5 wherein, during the first adjustment step, the flow rate of the fuel and/or of the oxidizer fed to said at least one burner (4) is adjusted so as to keep the temperature inside the firing chamber (7) within a first given interval.

7. The method according to any one of the preceding claims wherein, during the second adjustment step, the flow rate of the oxidizer and/or of the fuel fed to said at least one burner (4) is adjusted so as to keep the weight ratio between the oxidizer and the fuel within a second given interval.

8. The method according to any one of the preceding claims, wherein at least part of the base ceramic articles (BC) comprises less than approximately 50% by weight, in particular less than approximately 30% by weight, relative to the total weight of the base ceramic articles (BC), of alumina.

9. A kiln (1) for the firing of base ceramic articles (BC), said kiln (1) comprising:
at least one firing chamber (7), which is approximately 60m long;
a conveying device (5) to convey the base ceramic articles (BC) along a given path (P), which extends through the firing chamber (7) from an input station (8) to an output station (9) ;
at least one burner (4), which is configured to burn a combustion mixture in order to heat the firing chamber (7) so as to fire the base ceramic articles (BC) going through the firing chamber (7) and obtain ceramic slabs (PC), in particular tiles;
a first feeding device (12) to feed fuel towards said at least one burner (4);
a second feeding device (13) to feed oxidizer towards said at least one burner (4) so as to form, together with the fuel, said combustion mixture;
a first detection device (11), which is configured to detect the temperature inside the firing chamber (7);
at least one processing unit (20), which is configured to operate said first feeding device (12) or said second feeding device (13) depending on a temperature detected by the first detection device (11);
at least one first flow rate measuring device (19), which is configured to estimate the flow rate of the fuel or of the oxidizer fed to said at least one burner (4) after the first feeding device (12) or the second feeding device (13) has been operated;
said at least one processing unit (20) being configured to operate the first feeding device (12) and/or the second feeding device (13) depending on the flow rate of the fuel or of the oxidizer estimated by the first flow rate measuring device (19);
provided that, when the first flow rate measuring device (19) is configured to estimate the flow rate of the fuel, the processing unit (20) is configured to operate the second feeding device (13) depending on the flow rate of the fuel and the first feeding device (12) depending on the temperature; when the first flow rate measuring device (19) is configured to estimate the flow rate of the oxidizer, the processing unit (20) is configured to operate the first feeding device (12) depending on the flow rate of the oxidizer and the second feeding device (13) depending on the temperature;
a second detection device (22) which is configured to detect the concentration of oxygen in said firing chamber (7);
said at least one processing unit (20) being configured to adjust the first feeding device (12) and/or the second feeding device (13) depending on the concentration detected by said second detection device (22) so as to maintain the concentration of oxygen in the firing chamber (7) within a second given interval.

10. The kiln (1) according to claim 9, and comprising a second flow rate measuring device (21), which is configured to estimate the flow rate of the fuel or of the oxidizer fed to said at least one burner (4) after said first feeding device (12) or said second feeding device (13) has been operated; the processing unit (20) being configured to operate said first feeding device (12) and/or said second feeding device (13) depending on the flow rate value estimated by the second flow rate measuring device (21);
provided that, when the first flow rate measuring device (19) is configured to estimate the flow rate of the fuel fed to said at least one burner (4), the second flow rate measuring device (21) is configured to estimate the flow rate of the oxidizer fed to said at least one burner (4); when the first flow rate measuring device (19) is configured to estimate the flow rate of the oxidizer fed to said at least one burner (4), the second flow rate measuring device (21) is configured to estimate the flow rate of the fuel fed to said at least one burner (4) by means of the first feeding device (12).

11. The kiln (1) according to claim 9 or 10, wherein:
the first feeding device (12) comprises a fuel feeding duct (14) to feed the fuel to said at least one burner (4) and a first adjustment valve (15) to adjust the flow rate of the fuel along the fuel feeding duct (14);
the first flow rate measuring device (19) is arranged along the fuel feeding duct (14) upstream of said at least one burner (4) so as to measure the flow rate of the fuel fed to said at least one burner (4); and
the processing unit (20) is configured to operate the first adjustment valve (15) depending on the temperature detected by the first detection device (11) and the second feeding device (13) depending on the flow rate value measured by the first flow rate measuring device (19).

12. The kiln (1) according to claim 11, and comprising a second flow rate measuring device (21);
the second feeding device (13) comprising an oxidizer feeding duct (16) to feed the oxidizer to said at least one burner (4) and a second adjustment valve (17) to adjust the flow rate of the oxidizer along the oxidizer feeding duct (16);
the second flow rate measuring device (21) being arranged along the oxidizer feeding duct (16) upstream of said at least one burner (4) so as to measure the flow rate of the oxidizer fed to said at least one burner (4);
the processing unit (20) being configured to operate the second adjustment valve (17) depending on the flow rate value measured by the second flow rate measuring device (21).

13. The kiln (1) according to any one of the claims from 9 to 12, wherein the processing unit (20) is configured to adjust the first feeding device (12) and/or the second feeding device (13) so as to keep the temperature inside the firing chamber (7) within a first given interval.

14. The kiln (1) according to any one of the claims from 9 to 13, wherein the first flow rate measuring device (19) comprises a respective calibrated flange; in particular, the second flow rate measuring device (21) comprises a respective calibrated flange.

15. The kiln (1) according to any one of the claims from 9 to 14, and comprising a memory;
the processing unit (20) being configured to store the flow rate values measured by the first flow rate measuring device (19) and by the second flow rate measuring device (21) in the memory.

## Patentansprüche

1. Verfahren zum Brennen von Keramikartikeln mit im Wesentlichen flachen Boden (BC);
wobei das Verfahren aufweist:
wenigstens einen Transportschritt, während dem die Boden-Keramikartikel (BC) entlang einem gegebenen Pfad (P) transportiert werden, der von einer Eingangsstation (8) zu einer Ausgangsstation (9) über eine Brennkammer (7) eines Brennofens (1) verläuft;
einen ersten Zuführungsschritt, während dem ein Kraftstoff in Richtung des wenigstens einen Brenners (4) zugeführt wird;
einen zweiten Zuführungsschritt, während dem ein Oxidationsmittel in Richtung des wenigstens einen Brenners (4) zugeführt wird;
einen Verbrennungsschritt, während dem eine dem wenigstens einem Brenner (4) zugeführte Verbrennungsmischung, die aus dem Kraftstoff und dem Oxidationsmittel erhalten wird, verbrannt wird;
wenigstens einen Brennschritt, der wenigstens teilweise gleichzeitig mit dem Verbrennungsschritt ist und während dem der wenigstens eine Brenner (4) die Brennkammer (7) erhitzt, um so die Boden-Keramikartikel (BC) in der Brennkammer (7) zu brennen und Keramikplatten (PC), im Besonderen Fliesen, zu erhalten,
wenigstens einen ersten Anpassungsschritt, der wenigstens teilweise gleichzeitig mit dem Verbrennungsschritt ist und während dem die Strömungsrate des Kraftstoffs und/oder des Oxidationsmittels, die dem wenigsten einen Brenner (4) während des ersten und/oder des zweiten Zuführungsschritts zugeführt werden, abhängig von einer in der Brennkammer (7) erfassten Temperatur angepasst werden;
wenigstens einen ersten Strömungsraten-Messschritt, während dem eine erste Strömungsraten-Messvorrichtung (19) die Strömungsrate des Kraftstoffs oder des Oxidationsmittels schätzt, das dem wenigstens einen Brenner (4) während des ersten oder des zweiten Zuführungsschritts zugeführt wird; vorausgesetzt, dass wenn während des ersten Anpassungsschritts die Kraftstoffströmungsrate angepasst wird, die Kraftstoffströmungsrate während des ersten Messschritts geschätzt wird; wenn während des ersten Anpassungsschritts die Strömungsrate des Oxidationsmittels angepasst wird, wird die Strömungsrate des Oxidationsmittels während des ersten Messschritts geschätzt;
wenigstens einen zweiten Anpassungsschritt, während dem die Strömungsrate des dem wenigstens einen Brenner (4) während des zweiten und/oder des ersten Zuführungsschritts zugeführten Kraftstoffs und/oder Oxidationsmittels abhängig von der Strömungsrate des Kraftstoffs oder des Oxidationsmittels, die während des ersten Strömungsraten-Messschritts geschätzt wurde, angepasst werden; und einen Erfassungsschritt, während dem die Sauerstoffkonzentration in der Brennkammer (7) erfasst wird, um so eine erfasste Konzentration zu erhalten;
wobei während des ersten Anpassungsschritts und des zweiten Anpassungsschritts das Gewichtsverhältnis zwischen dem dem wenigstens einen Brenner (4) zugeleiteten Oxidationsmittel und dem Kraftstoff abhängig von der erfassten Konzentration variiert wird; im Besonderen während des ersten Anpassungsschritts und des zweiten Anpassungsschritts das Gewichtsverhältnis zwischen der Strömungsrate des Oxidationsmittels und der Strömungsrate des Kraftstoffs, die dem wenigstens einen Brenner (4) zugeführt werden, variiert wird, um so die Konzentration des Sauerstoffs in der Brennkammer (7) innerhalb eines dritten vorgegebenen Intervalls beizubehalten.

2. Verfahren nach Anspruch 1, wobei, wenn während des ersten Anpassungsschritts die Kraftstoffströmungsrate angepasst wird, wird die Strömungsrate des Oxidationsmittels während des zweiten Anpassungsschritts abhängig von der während des ersten Strömungsraten-Messschritts geschätzten Kraftstoffströmungsrate angepasst; wenn während des ersten Anpassungsschritts die Strömungsrate des Oxidationsmittels angepasst wird, wird während des zweiten Anpassungsschritts die Strömungsrate des Kraftstoffs abhängig von der während des ersten Strömungsraten-Messschritts geschätzten Strömungsrate des Oxidationsmittels angepasst.

3. Verfahren nach Anspruch 1 oder 2 und einen zweiten Strömungsraten-Messschritt aufweisend, während dem eine zweite Strömungsraten-Messvorrichtung (21) die Strömungsrate des dem wenigstens einen Brenner (4) während des ersten oder des zweiten Zuführungsschritts zugeführten Oxidationsmittels oder Kraftstoffs schätzt; wenn während des ersten Strömungsraten-Messschritts die erste Strömungsraten-Messvorrichtung (19) die Strömungsrate des dem wenigstens einen Brenner (4) während des ersten Zuführungsschritts zugeführten Kraftstoffs schätzt, schätzt die zweite Strömungsraten-Messvorrichtung (21) die Strömungsrate des dem wenigstens einen Brenner (4) während des zweiten Zuführungsschritts zugeführten Oxidationsmittels; wenn während des ersten Strömungsraten-Messschritts die erste Strömungsraten-Messvorrichtung (19) die Strömungsrate des dem wenigstens einen Brenner (4) während des zweiten Zuführungsschritts zugeführten Oxidationsmittels schätzt, schätzt die zweite Strömungsraten-Messvorrichtung (21) die Strömungsrate des dem wenigstens einen Brenner (4) während des ersten Zuführungsschritts zugeführten Kraftstoffs; während des zweiten Anpassungsschritts werden die Strömungsrate des dem wenigstens einen Brenner (4) während des ersten und/oder des zweiten Zuführungsschritts zugeführten Kraftstoffs und/oder Oxidationsmittels abhängig von der Strömungsrate des Kraftstoffs und/oder des Oxidationsmittels angepasst, die während des ersten oder des zweiten Strömungsraten-Messchritts geschätzt werden.

4. Verfahren nach einem der Ansprüche 1 bis 3, wobei: während des ersten Anpassungsschritts wird die Strömungsrate des dem wenigstens einen Brenner (4) während des ersten Zuführungsschritts zugeführten Kraftstoffs abhängig von einer in der Brennkammer (7) erfassten Temperatur angepasst; während des ersten Strömungsraten-Messschritts schätzt die erste Strömungsraten-Messvorrichtung (19) die Strömungsrate des dem wenigstens einen Brenner (4) während des ersten Zuführungsschritts zugeführten Kraftstoffs; während des zweiten Anpassungsschritts wird die Strömungsrate des dem wenigstens einen Brenner (4) während des zweiten Zuführungsschritts zugeführten Oxidationsmittels abhängig von der während des ersten Strömungsraten-Messschritts geschätzten Strömungsrate des Kraftstoffs angepasst.

5. Verfahren nach Anspruch 4 und einen zweiten Strömungsraten-Messschritt aufweisend, während dem eine zweite Strömungsraten-Messvorrichtung (21) die Strömungsrate des dem wenigstens einen Brenner (4) während des zweiten Zuführungsschritts zugeführten Oxidationsmittels schätzt, während des zweiten Zuführungsschritts werden die Strömungsrate des dem wenigstens einem Brenner (4) während des zweiten Zuführungsschritts und/oder während des ersten Zuführungsschritts zugeführten Oxidationsmittels und/oder des Kraftstoffs ebenso abhängig von der während des zweiten Messschritts geschätzten Strömungsrate des Oxidationsmittels angepasst.

6. Verfahren nach einem der Ansprüche 1 bis 5, wobei während des ersten Anpassungsschritts die Strömungsrate des Kraftstoffes und/oder des Oxidationsmittels, die dem wenigstens eine Brenner (4) zugeführt werden, angepasst wird, um so die Temperatur in der Brennkammer (7) innerhalb eines ersten gegebenen Intervalls zu halten.

7. Verfahren nach einem der vorhergehenden Ansprüche, wobei während des zweiten Anpassungsschritts die Strömungsrate des dem wenigstens einen Brenner (4) zugeführten Oxidationsmittels und/oder des Kraftstoffes angepasst wird, um so das Gewichtsverhältnis zwischen dem Oxidationsmittel und dem Kraftstoff innerhalb eines zweiten gegebenen Intervalls zu halten.

8. Verfahren nach einem der vorhergehenden Ansprüche, wobei wenigstens ein Teil der Boden-Keramikartikel (BC) weniger als etwa 50 Gewichtsprozent, im Besonderen weniger als etwa 30 Gewichtsprozent, bezüglich des Gesamtgewichts der Boden-Keramikartikel (BC) an Aluminium aufweist.

9. Brennofen (1) zum Brennen von Boden-Keramikartikeln (BC), wobei der Brennofen (1) aufweist:
wenigstens eine Brennkammer (7), die in etwa 60 m lang ist;
eine Transportvorrichtung (5), um die Boden-Keramikartikel (BC) entlang eines gegebenen Pfads (P) zu transportieren, der durch die Brennkammer (7) von einer Eingangsstation (8) zu einer Ausgangsstation (9) verläuft;
wenigstens einen Brenner (4), der eingerichtet ist, eine Verbrennungsmischung zu verbrennen, um die Brennkammer (7) zu erhitzen, um so die Boden-Keramikartikel (BC), die durch die Brennkammer (7) durchtransportiert werden, zu brennen und Keramikplatten (PC), im Besonderen Fliesen, zu erhalten; eine erste Zuführungsvorrichtung (12), um Kraftstoff in Richtung des wenigstens einen Brenners (4) zuzuführen;
eine zweite Zuführungsvorrichtung (13), um Oxidationsmittel in Richtung des wenigstens einen Brenners (4) zuzuführen, um so zusammen mit dem Kraftstoff die Verbrennungsmischung zu bilden;
eine erste Erfassungsvorrichtung (11), die eingerichtet ist, die Temperatur in der Brennkammer (7) zu erfassen;
wenigstens eine Verarbeitungseinheit (20), die eingerichtet ist, die erste Zuführungsvorrichtung (12) oder die zweite Zuführungsrichtung (13) abhängig von einer von der ersten Erfassungseinrichtung (11) erfassten Temperatur zu betreiben;
wenigstens eine erste Strömungsraten-Messvorrichtung (19), die eingerichtet ist, die Strömungsrate des Kraftstoffs oder des Oxidationsmittels, das dem wenigstens einen Brenner (4) zugeführt wird, nachdem die erste Zuführungsvorrichtung (12) oder die zweite Zuführungsvorrichtung (13) betrieben werden, zu schätzen;
wenigstens eine Verarbeitungseinheit (20), die eingerichtet ist, die erste Zuführungsvorrichtung (12) und/oder die zweite Zuführungsrichtung (13) abhängig von der von der ersten Strömungsraten-Messvorrichtung (19) geschätzten Strömungsrate des Kraftstoffs oder des Oxidationsmittels zu betreiben;
vorausgesetzt, dass wenn die erste Strömungsraten-Messvorrichtung (19) eingerichtet ist, die Strömungsrate des Kraftstoff zu schätzen, ist die Verarbeitungseinheit (20) eingerichtet, die zweite Zuführungsvorrichtung (13) abhängig von der Strömungsrate des Kraftstoffs und die erste Zuführungsvorrichtung (12) abhängig von der Temperatur zu betreiben;
wenn die erste Strömungsraten-Messvorrichtung (19) eingerichtet ist, die Strömungsrate des Oxidationsmittels zu schätzen, ist die Verarbeitungseinheit (20) eingerichtet, die erste Zuführungsvorrichtung (12) abhängig von der Strömungsrate des Oxidationsmittels und die zweite Zuführungsvorrichtung (13) abhängig von der Temperatur zu betreiben;
eine zweite Erfassungsvorrichtung (22), die eingerichtet ist, die Konzentration von Sauerstoff in der Brennkammer (7) zu erfassen;
wobei wenigstens eine Verarbeitungseinheit (20) eingerichtet ist, die erste Zuführungsvorrichtung (12) und/oder die zweite Zuführungsvorrichtung (13) abhängig von der durch die zweite Erfassungsvorrichtung (22) erfasste Konzentration anzupassen, um die Konzentration des Sauerstoffs in der Brennkammer (7) innerhalb eines zweiten gegebenen Intervalls beizubehalten.

10. Brennofen (1) nach Anspruch 9, und eine zweite Strömungsraten-Messvorrichtung (21) aufweisend, die eingerichtet ist, die Strömungsrate des Kraftstoffs oder des Oxidationsmittels, die dem wenigsten einen Brenner (4) zugeführt werden, nachdem die erste Zuführungsvorrichtung und die zweite Zuführungsvorrichtung (13) betrieben werden, zu schätzen; wobei die Verarbeitungseinheit (20) eingerichtet ist, die erste Zuführungsvorrichtung (12) und/oder die zweite Zuführungsvorrichtung (13) abhängig von dem Strömungsratenwert zu betreiben, der von der zweiten Strömungsraten-Messvorrichtung (21) geschätzt wurde;
vorausgesetzt, dass wenn die erste Strömungsraten-Messvorrichtung (19) eingerichtet ist, die Strömungsrate des dem wenigstens einen Brenner (4) zugeführten Kraftstoffs zu schätzen, die zweite Strömungsraten-Messvorrichtung (21) eingerichtet ist, die Strömungsrate des dem wenigstens einen Brenner (4) zugeführten Oxidationsmittels zu schätzen; wenn die erste Strömungsraten-Messvorrichtung (19) eingerichtet ist, die Strömungsrate des Oxidationsmittels zu schätzen, das dem wenigstens einem Brenner (4) zugeführt wurde, ist die zweite Strömungsraten-Messvorrichtung (21) eingerichtet, die Strömungsrate des Kraftstoffs zu schätzen, der dem wenigstens einen Brenner (4) mittels der ersten Zuführungsvorrichtung (12) zugeführt wurde.

11. Brennofen (1) nach Anspruch 9 oder 10, wobei
die erste Zuführungsvorrichtung (12) einen Kraftstoffzufuhrkanal (14) aufweist, um den Kraftstoff dem wenigstens einen Brenner (4) zuzuführen und ein erstes Anpassungsventil (15), um die Strömungsrate des Kraftstoffs entlang dem Kraftstoffzufuhrkanal (14) anzupassen;
die erste Strömungsraten-Messvorrichtung (19) entlang dem Kraftstoffzufuhrkanal (14) vorgelagert zu dem wenigstens einen Brenner (4) angeordnet ist, um so die Strömungsrate des dem wenigsten einen Brenner (4) zugeführten Kraftstoffs zu messen; und
die Verarbeitungseinheit (20) eingerichtet ist, das erste Anpassungsventil (15) abhängig von der von der ersten Erfassungsvorrichtung (11) erfassten Temperatur und die zweiten Zuführungsvorrichtung (13) abhängig von dem von der ersten Strömungsraten-Messvorrichtung (19) gemessenen Strömungsratenwert zu betreiben.

12. Brennofen (1) nach Anspruch 11 und eine zweite Strömungsraten-Messvorrichtung (21) aufweisend;
wobei die zweite Zuführungsvorrichtung (13) einen Oxidationsmittelzufuhrkanal (16) aufweist, um das Oxidationsmittel dem wenigstens einen Brenner (4) zuzuführen, und ein zweites Anpassungsventil (17), um die Strömungsrate des Oxidationsmittels entlang dem Oxidationsmittelzufuhrkanal (16) anzupassen; die zweite Strömungsraten-Messvorrichtung (21) entlang dem Oxidationsmittelzufuhrkanal (16) vorgelagert zu dem wenigstens einen Brenner (4) angeordnet ist, um so die Strömungsrate des dem wenigsten einen Brenner (4) zugeführten Oxidationsmittels zu messen;
die Verarbeitungseinheit (20) eingerichtet ist, das zweite Anpassungsventil (17) in Abhängigkeit von dem Strömungsratenwert, der von der zweiten Strömungsraten-Messvorrichtung (21) gemessen wurde, zu betreiben.

13. Brennofen (1) nach einem der Ansprüche 9 bis 12, wobei die Verarbeitungseinheit (20) eingerichtet ist, die erste Zuführungsvorrichtung (12) und/oder die zweite Zuführungsvorrichtung (13) anzupassen, um so die Temperatur in der Brennkammer (7) innerhalb eines ersten gegebenen Intervalls zu halten.

14. Brennofen (1) nach einem der Ansprüche von 9 bis 13, wobei die erste Strömungsraten-Messvorrichtung (19) einen jeweiligen kalibrierten Flansch aufweist; im Besonderen die zweite Strömungsraten-Messvorrichtung (21) einen jeweiligen kalibrierten Flansch aufweist.

15. Brennofen (1) nach einem der Ansprüche der Ansprüche 9 bis 14, und einen Speicher aufweisend;
wobei die Verarbeitungseinheit (20) eingerichtet ist, die Strömungsratenwerte, die von der ersten Strömungsraten-Messvorrichtung (19) und von der zweiten Strömungsraten-Messvorrichtung (21) gemessen werden, im Speicher zu speichern.

## Revendications

1. Méthode pour la cuisson d'articles en céramique de base (BC) sensiblement plats ; la méthode comprenant :
au moins une étape de transport, au cours de laquelle les articles en céramique de base (BC) sont transportés le long d'un trajet donné (P), qui s'étend depuis une station d'entrée (8) jusqu'à une station de sortie (9) à travers une chambre de cuisson (7) d'un four (1) ;
une première étape d'amenée, au cours de laquelle un combustible est amené vers au moins un brûleur (4) ;
une seconde étape d'amenée, au cours de laquelle un oxydant est amené vers ledit au moins un brûleur (4) ;
une étape de combustion, au cours de laquelle un mélange de combustion, qui est obtenu à partir du combustible et de l'oxydant amenés vers ledit au moins un brûleur (4), est brûlé ;
au moins une étape de cuisson, qui est au moins partiellement simultanée avec l'étape de combustion et au cours de laquelle ledit au moins un brûleur (4) chauffe ladite chambre de cuisson (7) de manière à cuire les articles en céramique de base (BC) à l'intérieur de la chambre de cuisson (7) et obtenir des plaques en céramique (PC), en particulier des carreaux ;
au moins une première étape d'ajustement, qui est au moins partiellement simultanée avec l'étape de combustion et au cours de laquelle le débit du combustible et/ou de l'oxydant amenés vers ledit au moins un brûleur (4) au cours des première et/ou seconde étapes d'amenée est ajusté en fonction d'une température détectée à l'intérieur de la chambre de cuisson (7) ;
au moins une première étape de mesure de débit, au cours de laquelle un premier dispositif de mesure de débit (19) estime le débit du combustible ou de l'oxydant amené vers ledit au moins un brûleur (4) au cours de la première ou seconde étape d'amenée ; à condition que, lorsque le débit de combustible est ajusté au cours de la première étape d'ajustement, le débit de combustible soit estimé au cours de la première étape de mesure ; lorsque le débit d'oxydant est ajusté au cours de la première étape d'ajustement, le débit d'oxydant soit estimé au cours de la première étape de mesure ;
au moins une seconde étape de mesure, au cours de laquelle le débit du combustible et/ou de l'oxydant amenés vers ledit au moins un brûleur (4) au cours des seconde et/ou première étapes d'amenée est ajusté en fonction du débit du combustible ou de l'oxydant estimé au cours de la première étape de mesure de débit ; et
une étape de détection, au cours de laquelle la concentration d'oxygène dans ladite chambre de cuisson (7) est détectée de manière à obtenir une concentration détectée ; au cours de la première étape d'ajustement et de la seconde étape d'ajustement, le rapport pondéral entre l'oxydant et le combustible amenés vers ledit au moins un brûleur (4) est varié en fonction de la concentration détectée ; en particulier, au cours de la première étape d'ajustement et de la seconde étape d'ajustement, le rapport pondéral entre le débit de l'oxydant et le débit du combustible amenés vers ledit au moins un brûleur (4) est varié de manière à maintenir la concentration d'oxygène dans la chambre de cuisson (7) à l'intérieur d'un troisième intervalle donné.

2. Méthode selon la revendication 1, dans laquelle, lorsque le débit de combustible est ajusté au cours de la première étape d'ajustement, le débit d'oxydant est ajusté au cours de la seconde étape d'ajustement en fonction du débit de combustible estimé au cours de la première étape de mesure de débit ; lorsque le débit d'oxydant est ajusté au cours de la première étape d'ajustement, le débit de combustible est ajusté au cours de la seconde étape d'ajustement en fonction du débit d'oxydant estimé au cours de la première étape de mesure de débit.

3. Méthode selon la revendication 1 ou 2, comprenant une seconde étape de mesure de débit, au cours de laquelle un second dispositif de mesure de débit (21) estime le débit de l'oxydant ou du combustible amené vers ledit au moins un brûleur (4) au cours de la première ou seconde étape d'amenée ; lorsque le premier dispositif de mesure de débit (19) estime, au cours de la première étape de mesure de débit, le débit du combustible amené vers ledit au moins un brûleur (4) au cours de la première étape d'amenée, le second dispositif de mesure de débit (21) estime le débit de l'oxydant amené vers ledit au moins un brûleur (4) au cours de la seconde étape d'amenée ; lorsque le premier dispositif de mesure de débit (19) estime, au cours de la première étape de mesure de débit, le débit de l'oxydant amené vers ledit au moins un brûleur (4) au cours de la seconde étape d'amenée, le second dispositif de mesure de débit (21) estime le débit du combustible amené vers ledit au moins un brûleur (4) au cours de la première étape d'amenée ;
au cours de la seconde étape d'ajustement, le débit du combustible et/ou de l'oxydant amenés vers ledit au moins un brûleur (4) au cours des première et/ou seconde étapes d'amenée est ajusté en fonction du débit du combustible et/ou de l'oxydant estimé au cours de la première ou seconde étapes de mesure de débit.

4. Méthode selon l'une quelconque des revendications 1 à 3, dans laquelle : au cours de la première étape de mesure, le débit du combustible amené vers ledit au moins un brûleur (4) au cours de la première étape d'amenée est ajusté en fonction d'une température détectée à l'intérieur de la chambre de cuisson (7) ; au cours de la première étape de mesure de débit, le premier dispositif de mesure de débit (19) estime le débit du combustible amené vers ledit au moins un brûleur (4) au cours de la première étape d'amenée ; au cours de la seconde étape d'ajustement, le débit de l'oxydant amené vers ledit au moins un brûleur (4) au cours de la seconde étape d'amenée est ajusté en fonction du débit du combustible estimé au cours de la première étape de mesure de débit.

5. Méthode selon la revendication 4, comprenant une seconde étape de mesure de débit, au cours de laquelle un second dispositif de mesure de débit (21) estime le débit de l'oxydant amené vers ledit au moins un brûleur (4) au cours de la seconde étape d'amenée ; au cours de la seconde étape d'ajustement, le débit de l'oxydant et/ou du combustible amenés vers ledit au moins un brûleur (4) au cours de la seconde étape d'amenée et/ou au cours de la première étape d'amenée est ajusté également en fonction du débit de l'oxydant estimé au cours de la seconde étape de mesure.

6. Méthode selon l'une quelconque des revendications 1 à 5, dans laquelle, au cours de la première étape de mesure, le débit du combustible et/ou de l'oxydant amenés vers ledit au moins un brûleur (4) est ajusté de manière à maintenir la température dans la chambre de cuisson (7) à l'intérieur d'un premier intervalle donné.

7. Méthode selon l'une quelconque des revendications précédentes, dans laquelle, au cours de la seconde étape d'ajustement, le débit de l'oxydant et/ou du combustible amenés vers ledit au moins un brûleur (4) est ajusté de manière à maintenir le rapport pondéral entre l'oxydant et le combustible à l'intérieur d'un deuxième intervalle donné.

8. Méthode selon l'une quelconque des revendications précédentes, dans laquelle au moins une partie des articles en céramique de base (BC) comprend moins d'environ 50 % en poids, en particulier moins d'environ 30 % en poids, par rapport au poids total des articles en céramique de base (BC), d'alumine.

9. Four (1) pour la cuisson d'articles en céramique de base (BC), ledit four (1) comprenant :
au moins une chambre de cuisson (7) d'une longueur d'environ 60 m ;
un dispositif de transport (5) pour transporter les articles en céramique de base (BC) le long d'un trajet donné (P), qui s'étend à travers la chambre de cuisson (7) depuis une station d'entrée (8) jusqu'à une station de sortie (9) ;
au moins un brûleur (4), qui est configuré pour brûler un mélange de combustion afin de chauffer la chambre de cuisson (7) de manière à cuire les articles en céramique de base (BC) traversant la chambre de cuisson (7) et obtenir des plaques en céramique (PC), en particulier des carreaux ;
un premier dispositif d'amenée (12) pour amener un combustible vers ledit au moins un brûleur (4) ;
un second dispositif d'amenée (13) pour amener un oxydant vers ledit au moins un brûleur (4) de manière à former, avec le combustible, ledit mélange de combustion ;
un premier dispositif de détection (11), qui est configuré pour détecter la température à l'intérieur de la chambre de cuisson (7) ;
au moins une unité de traitement (20), qui est configurée pour actionner ledit premier dispositif d'amenée (12) ou ledit deuxième dispositif d'amenée (13) en fonction d'une température détectée par le premier dispositif de détection (11) ;
au moins un premier dispositif de mesure de débit (19), qui est configuré pour estimer le débit du combustible ou de l'oxydant amené vers ledit au moins un brûleur (4) après que le premier dispositif d'amenée (12) ou le deuxième dispositif d'amenée (13) est actionné ;
ladite au moins une unité de traitement (20) étant configurée pour actionner le premier dispositif d'amenée (12) et/ou le deuxième dispositif d'amenée (13) en fonction du débit du combustible ou de l'oxydant estimé par le premier dispositif de mesure de débit (19) ;
à condition que, lorsque le premier dispositif de mesure de débit (19) est configuré pour estimer le débit du combustible, l'unité de traitement (20) soit configurée pour actionner le second dispositif d'amenée (13) en fonction du débit du combustible et le premier dispositif d'amenée (12) en fonction de la température ; lorsque le premier dispositif de mesure de débit (19) est configuré pour estimer le débit de l'oxydant, l'unité de traitement (20) soit configurée pour actionner le premier dispositif d'amenée (12) en fonction du débit de l'oxydant et le second dispositif d'amenée (13) en fonction de la température ;
un second dispositif de détection (22) qui est configuré pour détecter la concentration d'oxygène dans ladite chambre de cuisson (7) ;
ladite au moins une unité de traitement (20) étant configurée pour ajuster le premier dispositif d'amenée (12) et/ou le second dispositif d'amenée (13) en fonction de la concentration détectée par ledit second dispositif de détection (22) de manière à maintenir la concentration d'oxygène dans la chambre de cuisson (7) à l'intérieur d'un deuxième intervalle donné.

10. Four (1) selon la revendication 9, comprenant un second dispositif de mesure de débit (21), qui est configuré pour estimer le débit du combustible ou de l'oxydant amené vers ledit au moins un brûleur (4) après que ledit premier dispositif d'amenée (12) ou ledit second dispositif d'amenée (13) est actionné ; l'unité de traitement (20) étant configurée pour actionner ledit premier dispositif d'amenée (12) et/ou ledit second dispositif d'amenée (13) en fonction de la valeur de débit estimée par le second dispositif de mesure de débit (21) ;
à condition que, lorsque le premier dispositif de mesure de débit (19) est configuré pour estimer le débit du combustible amené vers ledit au moins un brûleur (4), le second dispositif de mesure de débit (21) soit configuré pour estimer le débit de l'oxydant amené vers ledit au moins un brûleur (4) ; lorsque le premier dispositif de mesure de débit (19) est configuré pour estimer le débit de l'oxydant amené vers ledit au moins un brûleur (4), le second dispositif de mesure de débit (21) soit configuré pour estimer le débit du combustible amené vers ledit au moins un brûleur (4) au moyen du premier dispositif d'amenée (12).

11. Four (1) selon la revendication 9 ou 10, dans lequel :
le premier dispositif d'amenée (12) comprend un conduit d'amenée de combustible (14) pour amener le combustible vers ledit au moins un brûleur (4) et une première vanne d'ajustement (15) pour ajuster le débit du combustible le long du conduit d'amenée de combustible (14) ;
le premier dispositif de mesure de débit (19) est agencé le long du conduit d'amenée de combustible (14) en amont dudit au moins un brûleur (4) de manière à mesurer le débit du combustible amené vers ledit au moins un brûleur (4) ; et
l'unité de traitement (20) est configurée pour actionner la première vanne d'ajustement (15) en fonction de la température détectée par le premier dispositif de détection (11) et le second dispositif de détection (13) en fonction de la valeur de débit mesurée par le premier dispositif de mesure de débit (19).

12. Four (1) selon la revendication 11, comprenant un second dispositif de mesure de débit (21) ;
le second dispositif d'amenée (13) comprenant un conduit d'amenée d'oxydant (16) pour amener l'oxydant vers ledit au moins un brûleur (4) et une seconde vanne d'ajustement (17) pour ajuster le débit de l'oxydant le long du conduit d'amenée d'oxydant (16) ;
le second dispositif de mesure de débit (21) étant agencé le long du conduit d'amenée d'oxydant (16) en amont dudit au moins un brûleur (4) de manière à mesurer le débit de l'oxydant amené vers ledit au moins un brûleur (4) ;
l'unité de traitement (20) étant configurée pour actionner la seconde vanne d'ajustement (17) en fonction de la valeur de débit mesurée par le second dispositif de mesure de débit (21).

13. Four (1) selon l'une quelconque des revendications 9 à 12, dans lequel l'unité de traitement (20) est configurée pour ajuster le premier dispositif d'amenée (12) et/ou le second dispositif d'amenée (13) de manière à maintenir la température à dans la chambre de cuisson (7) à l'intérieur d'un premier intervalle donné.

14. Four (1) selon l'une quelconque des revendications 9 à 13, dans lequel le premier dispositif de mesure de débit (19) comprend une bride étalonnée respective ; en particulier, le second dispositif de mesure de débit (21) comprend une bride étalonnée respective.

15. Four (1) selon l'une quelconque des revendications 9 à 14, comprenant une mémoire ;
l'unité de traitement (20) étant configurée pour stocker les valeurs de débit mesurées par le premier dispositif de mesure de débit (19) et par le second dispositif de mesure de débit (21) dans la mémoire.
